Europäisches Patentamt

European Patent Office

Office européen des brevets

(19)

(11) Veröffentlichungsnummer: **0 133 860**
**A1**

(12) # EUROPÄISCHE PATENTANMELDUNG

(21) Anmeldenummer: **83890130.4**

(22) Anmeldetag: **16.08.83**

(51) Int. Cl.⁴: **B 60 P 1/44**

(43) Veröffentlichungstag der Anmeldung: **13.03.85**
**Patentblatt 85/11**

(84) Benannte Vertragsstaaten: **BE DE FR GB IT NL**

(71) Anmelder: **Buchbauer, Alois, A-4775 Taufkirchen Nr. 75 (AT)**

(72) Erfinder: **Buchbauer, Alois, A-4775 Taufkirchen Nr. 75 (AT)**

(74) Vertreter: **Hübscher, Gerhard, Dipl.-Ing. et al, Patentanwälte Dipl.-Ing. Gerhard Hübscher Dipl.-Ing. Helmut Hübscher Dipl.-Ing. Heiner Hübscher Spittelwiese 7, A-4020 Linz (AT)**

(54) **Ladevorrichtung für Transportfahrzeuge.**

(57) Die einfaltbare und unter die Ladepritsche klappbare Ladeplattform (4) einer Ladevorrichtung ist über ein vertikal verschwenkbares Gelenkparallelogramm (1) mit einem Zylinder (7) als unteren Lenker am Fahrzeugrahmen (3) angelenkt, wobei vorzugsweise am oberen Lenker (6) des Gelenkparallelogrammes (1) ein Hubzylinder (5) angreift.

Um die Ladeplattform (4) unabhängig von der Ausgestaltung des Fahrzeugrahmens (3) ein- und ausklappen zu können, ist der obere Lenker (6) des Gelenkparallelogrammes (1) längenverstellbar ausgebildet und mittels eines Stelltriebes in seiner Länge verstellbar.

EP 0 133 860 A1

ACTORUM AG

## Ladevorrichtung für Transportfahrzeuge

Die Erfindung bezieht sich auf eine Ladevorrichtung für Transportfahrzeuge mit einer einfaltbaren und unter die Ladepritsche klappbaren Ladeplattform, die über ein vertikal verschwenkbares Gelenkparallelogramm mit einem Zylinder als unteren Lenker am Fahrzeugrahmen angelenkt ist, und mit einem vorzugsweise am oberen Lenker des Gelenkparallelogrammes angreifenden Hubzylinder.

Durch die Anlenkung der Ladepritsche am Fahrzeugrahmen über ein Gelenkparallelogramm wird in einfacher Weise die Hubbewegung der Ladeplattform parallel zu sich selbst erreicht, wobei auf Grund der Ausbildung des unteren Lenkers des Gelenkparallelogrammes als Zylinder die Neigung der Ladeplattform durch eine Veränderung der Länge des unteren Lenkers eingestellt werden kann. Um vergleichsweise große Ladeplattformen in nicht störender Weise in ihrer Transportstellung innerhalb der Umrißform des Transportfahrzeuges unterbringen zu können, ist es bekannt, die Ladeplattform gelenkig zu unterteilen und die beiden Plattformteile aufeinander zu klappen, damit die so eingefaltete Ladeplattform gegen den oberen Lenker des Gelenkparallelogrammes hochgeschwenkt und unter die Ladepritsche des Transportfahrzeuges geklappt werden kann. Da die Länge der Lenker des Gelenkparallelogrammes darauf abgestimmt sein muß, daß die abgeklappte und auseinandergefaltete Ladeplattform in ihrer oberen Arbeitsstellung an die Ladepritsche des Transportfahrzeuges anschließt, ergeben sich beim Einklappen der eingefalteten Ladepritsche auf das Gelenkparallelogramm Platzschwierigkeiten, weil der Fahrzeugrahmen mit der Anhängekupplung od. dgl. in den Schwenkbereich der Ladeplattform vorragt. Zur Lösung dieser Schwierigkeiten wäre es möglich, das Gelenkparallelogramm und den Hubzylinder beispielsweise an einem Schlitten anzuordnen, der gegenüber dem Fahrzeugrahmen verstellbar gelagert ist, um die eingeklappte Ladeplattform entsprechend weit unter den Fahrzeugrahmen vorzuschieben, bevor sie in die Arbeitsstellung auseinandergeklappt wird. Diese Lösung bedarf aber wiederum eines ausreichenden Verschiebeweges für den Schlitten, ganz abgesehen davon, daß der konstruktive und bauliche Aufwand vergleichsweise groß ist.

Der Erfindung liegt somit die Aufgabe zugrunde, diese Mängel zu vermeiden und eine Ladevorrichtung für Transportfahrzeuge der eingangs geschilderten Art so zu verbessern, daß die Ladeplattform unabhängig von der Ausgestaltung des Fahrzeugrahmens ein- und ausgeklappt werden kann, ohne daß die unter die Ladepritsche geklappte Ladeplattform über die Umrißform des Transportfahrzeuges vorsteht.

Die Erfindung löst die gestellte Aufgabe dadurch, daß der obere Lenker des Gelenkparallelogrammes längenverstellbar ausgebildet und mittels eines Stelltriebes in seiner Länge verstellbar ist.

Da auf Grund dieser Maßnahmen nicht nur der untere Lenker, sondern auch der obere Lenker des Gelenkparallelogrammes bezüglich ihrer Länge verändert werden können, kann auch die Länge des Gelenkparallelogrammes verändert werden, dann nämlich, wenn sowohl der untere Lenker als auch der obere Lenker gemeinsam verlängert oder verkürzt werden. Durch eine Verlängerung des Gelenkparallelogrammes kann folglich die eingeklappte Ladeplattform so weit unter dem Fahrzeugrahmen hervorgeschoben werden, daß ein unbehindertes Auseinanderklappen und Auseinanderfalten der Ladeplattform möglich ist. Um die Arbeitsstellung der so auseinandergeklappten Ladeplattform zu erreichen, ist allerdings eine entsprechende Verkürzung der Lenker des Gelenkparallelogrammes erforderlich. Daß der Hubzylinder bei einer festen Anlenkung am oberen Lenker bei der Verlängerung bzw. Verkürzung des Gelenkparallelogrammes die Längenänderung mitmachen muß, ist wohl selbstverständlich und braucht nicht besonders hervorgehoben zu werden.

Durch die erfindungsgemäßen Maßnahmen werden somit alle Vorteile sichergestellt, die mit einem verschiebbaren Schlitten für das Gelenkparallelogramm erreicht werden können, ohne jedoch die mit der Anordnung eines solchen Schlittens verbundenen Nachteile in Kauf nehmen zu müssen. Insbesondere kann bei Verkürzung des Gelenkparallelogrammes über die der Arbeitsstellung der Plattform entsprechende Länge hinaus die eingefaltete und eingeklappte Ladeplattform weiter unter die Ladepritsche verschoben werden, was den Einsatz größerer Ladeplattformen erlaubt.

Es ist zwar bereits bekannt (DE-ASen 15 80 662 und 15 80 672), den oberen Lenker des Gelenkparallelogrammes einer Ladevorrichtung längenverstellbar auszubilden, doch dient diese Längenverstellbarkeit des oberen Lenkers lediglich dazu, die Ladeplattform einzuklappen, weil bei dieser bekannten Konstruktion der untere Lenker in seiner Länge unveränderbar festliegt. Damit ist keineswegs die Möglichkeit geschaffen, das Gelenkparallelogramm zu verlängern oder zu verkürzen, so daß mit einer solchen Konstruktion die der Erfindung zugrundeliegende Aufgabe nicht gelöst werden kann. Da darüber hinaus ein Verschwenken der Ladeplattform nur von Hand aus möglich ist, wird an den teleskopisch gegeneinander verschiebbaren Teilen des oberen Lenkers des Gelenkparallelogrammes eine Gewichtsausgleichsfeder angelenkt, die die Handhabung der Ladeplattform erleichtert, die freie Verstellbarkeit des oberen Lenkers jedoch nicht behindern darf. Eine freie Verstellmöglichkeit des oberen Lenkers des Gelenkparallelogrammes würde bei einer erfindungsgemäßen Ladevorrichtung die Ladevorrichtung unbrauchbar machen.

Da, wie bereits ausgeführt wurde, bei einer Verlängerung oder Verkürzung des Gelenkparallelogrammes mit dem oberen Lenker auch der untere Lenker und der Hubzylinder verstellt werden müssen, kann in vorteilhafter Weise auch der Stelltrieb für den oberen Lenker des Gelenkparallelogrammes aus dem Hubzylinder und dem als unterer Lenker dienenden Zylinder bestehen, der abwechselnd oder gleichzeitig mit dem Hubzylinder beaufschlagbar ist. Werden sowohl der Hubzylinder als auch der Zylinder des unteren Lenkers gleichzeitig beaufschlagt, so wird zwangsweise der obere Lenker mitgenommen, was eben die Verlängerung bzw. Verkürzung des Gelenkparallelogrammes ergibt. Bei einer abwechselnden Beaufschlagung von Hubzylinder und Zylinder des unteren Lenkers wird ebenfalls eine Längenänderung des Gelenkparallelogrammes erreicht, wobei jedoch eine gewisse Wippbewegung der Ladeplattform in Kauf genommen werden muß, was jedoch keine Rolle spielt.

Besonders einfache Verhältnisse ergeben sich in weiterer Ausbildung der Erfindung dadurch, daß der obere Lenker des Gelenkparallelogrammes durch eine Rückzugfeder belastet ist. Die Zylinder der Ladevorrichtung brauchen beim Vorsehen einer solchen Rückzugfeder nur einseitig beaufschlagbar zu sein, weil eben die Rückzugfeder die ausgefahrenen Lenker und den Hubzylinder bei einer Belüftung der Zylinder in ihre Ausgangsstellung zurückzieht. Daß der obere Lenker bei dieser Konstruktion in seiner Länge frei verstellbar ausgebildet sein muß, ergibt sich wohl von selbst.

Wird als oberer Lenker des Gelenkparallelogramms ein Teleskoprohr verwendet, so ergibt sich der Vorteil, daß die Rückzugfeder in dieses Teleskoprohr eingesetzt werden kann. Eine demgemäß ausgerüstete Ladevorrichtung unterscheidet sich äußerlich kaum von den bisher gebräuchlichen.

In der Zeichnung ist der Erfindungsgegenstand in einem Ausführungsbeispiel dargestellt. Es zeigen

Fig. 1 eine erfindungsgemäße Ladevorrichtung mit einer eingefalteten und unter die Ladepritsche des Transportfahrzeuges geklappten Ladeplattform in Seitenansicht,

Fig. 2 die Ladevorrichtung in einer Zwischenstellung während des Auseinanderklappens der Ladeplattform,

Fig. 3 die Ladevorrichtung in der abgesenkten Arbeitsstellung und

Fig. 4 ein schematisches Blockschaltbild der Steuerung der Zylinder der Ladevorrichtung.

Die dargestellte Ladevorrichtung für ein Transportfahrzeug besteht im wesentlichen aus einem Gelenkparallelogramm 1, das über einen Anbaurahmen 2 am Rahmen 3 eines Transportfahrzeuges angelenkt ist und eine Ladeplattform 4 trägt. Zur Höhenverstellung dieses Gelenkparallelogrammes 1 dient ein Hubzylinder 5, der sich ebenfalls am Anbaurahmen 2 abstützt und am oberen Lenker 6 des Gelenkparallelogrammes 1 angreift. Der untere Lenker des Gelenkparallelogrammes ist als Zylinder 7 ausgebildet, über den die Neigung der Ladeplattform 4 eingestellt werden kann.

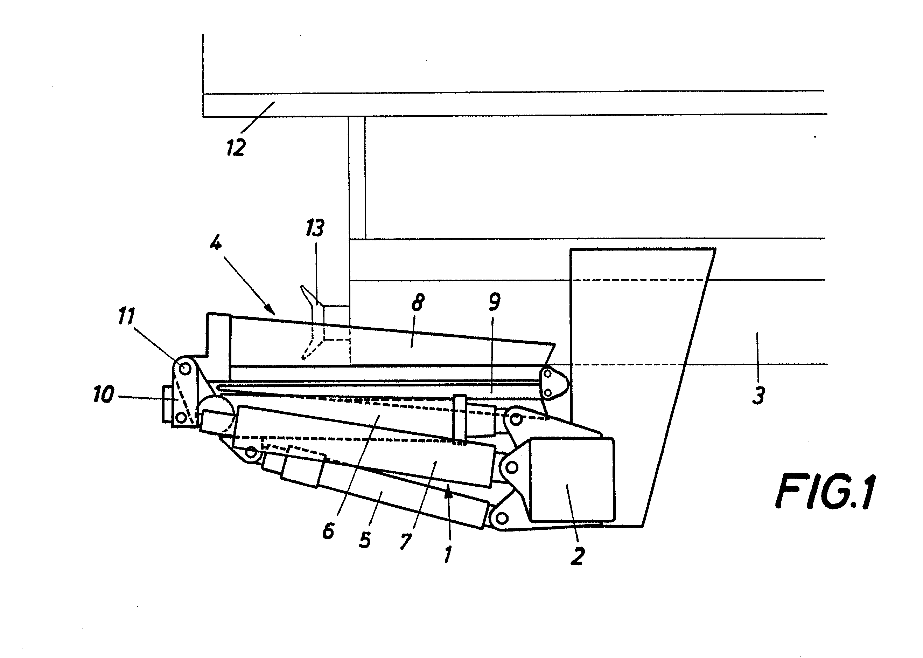

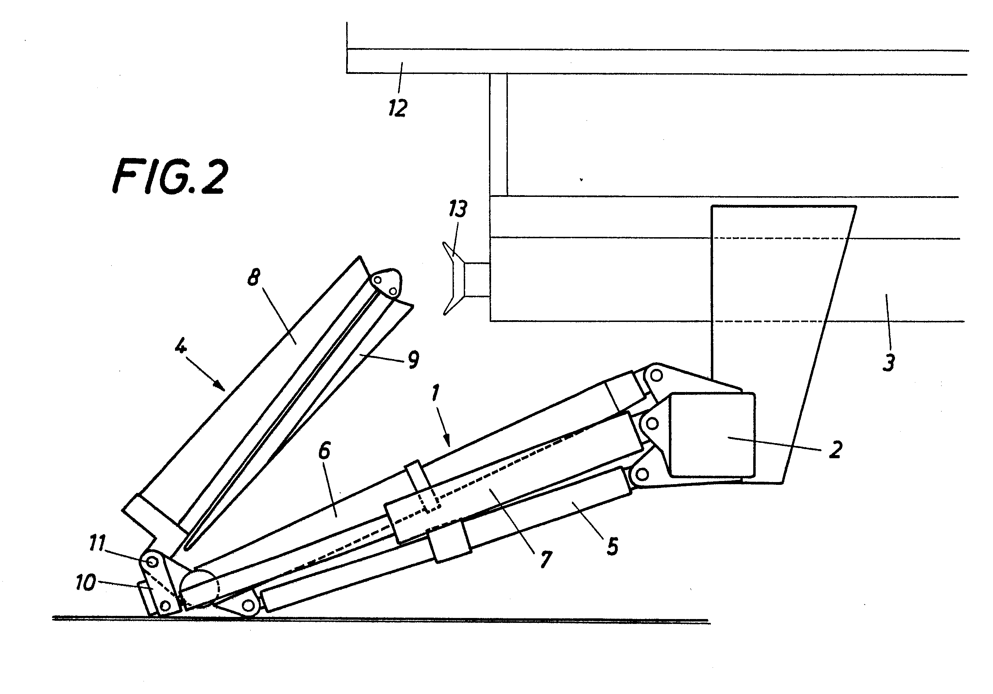

Die Ladeplattform besteht aus zwei gelenkig miteinander verbundenen Teilen 8 und 9, die aufeinandergeklappt werden können, wie dies insbesondere der Fig. 2 entnommen werden kann. Da die so eingefaltete Ladeplattform 4 schwenkbar an einem an dem Gelenkparallelogramm 1 angelenkten Anschlußstück 10 gelagert ist, kann die eingefaltete Plattform 4 um die Schwenkachse 11 dieses Anschlußstückes 10 gegen das Gelenkparallelogramm geklappt werden, um die angestrebte Transportstellung unterhalb der Ladepritsche 12 des Transportfahrzeuges erreichen zu können. In Fig. 1 ist eine solche Transportstellung gezeichnet.

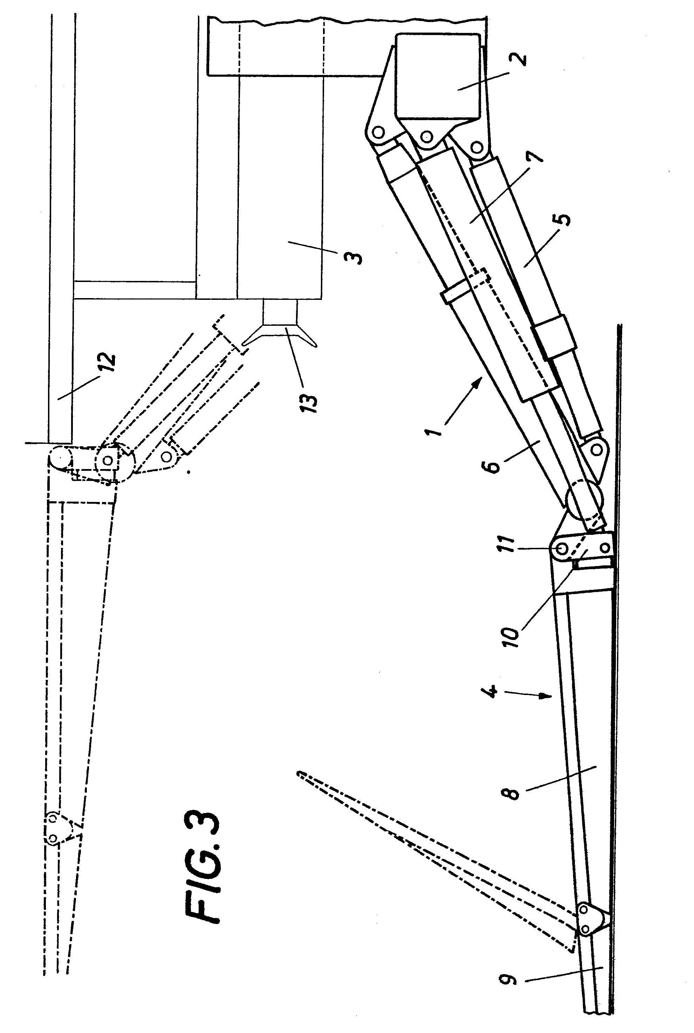

Zum Ausschwenken der Ladeplattform 4 ist es zunächst notwendig, die Ladeplattform 4 aus der Stellung nach Fig. 1 abzusenken, was durch eine Belüftung des Hubzylinders erreicht wird. Trotz eines solchen Absenkens ist ein Ausklappen der eingefalteten Ladeplattform 4 nicht möglich, weil der Fahrzeugrahmen 3 und die Anhängerkupplung 13 einem solchen Ausklappen im Wege stehen. Es wird demnach die Länge des Gelenkparallelogrammes 1 entsprechend vergrößert, um aus dem Bereich des Fahrzeugrahmens bzw. der Anhängerkupplung zu gelangen. Zu diesem Zweck ist der obere Lenker 6 des Gelenkparallelogrammes 1 als längenveränderbares Teleskoprohr ausgebildet. Der untere Lenker besteht ja aus einem Zylinder, so daß durch die Längenverstellbarkeit des oberen Lenkers 6 die Möglichkeit geschaffen ist, die Länge des Gelenkparallelogrammes 1 zu verstellen. Dies wird gemäß dem Ausführungsbeispiel mit Hilfe des Zylinders 7 und des am oberen Lenker 6 angreifenden Hubzylinders 5 durchgeführt. Bei einer entsprechenden Beaufschlagung der beiden Zylinder 5 und 7 wird die eingefaltete Ladeplattform 4 so weit unter dem Fahrzeugrahmen 3 vorgeschoben, bis die eingefaltete Ladeplattform 4 gemäß Fig. 2 abgeklappt werden kann. Nach dem Abklappen um die Schwenkachse 11 kann dann der äußere Teil 9 der Ladeplattform in die Gebrauchslage auseinandergefaltet werden, wie dies in Fig. 3 strichpunktiert angedeutet ist. Fig. 3 zeigt allerdings die Arbeitsstellung der Ladevorrichtung mit einem gegenüber der Ausklapplage nach Fig. 2 verkürzten Gelenkparallelogramm 1, das in der oberen, strichpunktiert angedeuteten Schwenkstellung den Anschluß der Ladeplattform an die Ladepritsche 12 des Transportfahrzeuges sicherstellen muß. Nach dem Ausklappen und Auseinanderfalten der Ladeplattform 4 ist daher das Gelenkparallelogramm 1 wieder zu verkürzen, was durch eine entsprechend dimensionierte Rückzugfeder erreicht werden kann, die vorteilhaft in den als Teleskoprohr ausgebildeten Lenker 6 eingesetzt ist. Werden die Zylinder 5 und 7 gleichzeitig belüftet, so zieht die im Lenker 6 untergebrachte Rückzugfeder den Lenker 6, den Lenker 7 und den Hubzylinder 5 gegen die Beaufschlagungsrichtung zurück, bis die Zylinder 5 und 7 wieder gesperrt werden.

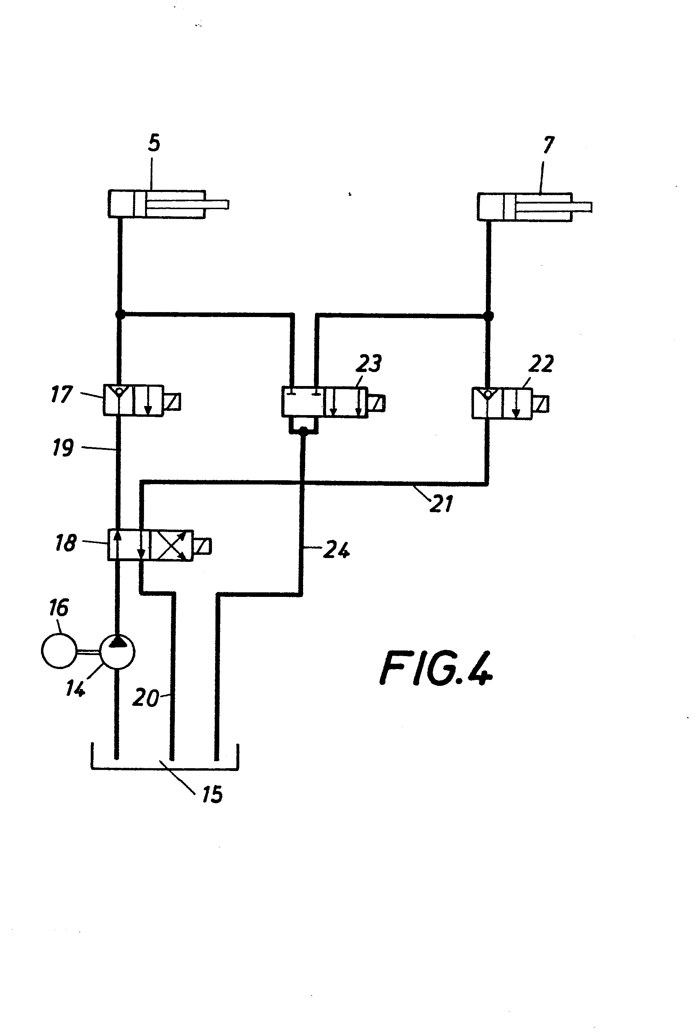

Wie Fig. 4 erkennen läßt, wird zum Heben der Ladeplattform 4 der Hubzylinder 5 über eine Pumpe 14 mit einem Hydraulikmittel aus einem Hydraulikmittelbehälter 15 versorgt, wobei nach dem Abstellen des Pumpenantriebes 16 die erreichte Hublage über den ein Rückschlagventil aufweisenden Zweig eines Zweiwegeventiles 17 festgehalten wird. Zum Absenken der Ladeplattform 4 wird das Zweiwegeventil 17 über seinen elektromagnetischen Antrieb durch einen entsprechenden Steuerbefehl verstellt, so daß das Hydraulikmittel aus dem Zylinder abfließen kann. Dies setzt allerdings voraus, daß auch ein dem Zweiwegeventil 17 vorgeschaltetes Ventil 18 umgeschaltet wird, um die an den Hubzylinder 5 angeschlossene Versorgungsleitung 19 mit einer Rückleitung 20 zu verbinden, die im Behälter 15 mündet. Auf Grund der Verbindung des Hubzylinders 5 mit der Rückleitung 20 kann sich die Ladeplattform gewichtsbedingt absenken.

Soll die Plattform in ihrer Winkelstellung verändert werden, so wird lediglich der Zylinder 7 beaufschlagt und damit der untere Lenker des Gelenkparallelogrammes 1 verlängert. Das Zweiwegeventil 18 wird zu diesem Zweck über seinen elektromagnetischen Antrieb so verstellt, daß die Pumpe 14 mit der Versorgungsleitung 21 für den Zylinder 7 verbunden wird. Das dem Zweiwegeventil 17 entsprechende Zweiwegeventil 22 verhindert beim Abschalten des Pumpenantriebes 16 über das Rückschlagventil ein Rückfließen des Hydraulikmittels. Die Ladeplattform 4 wird wiederum durch die Belastung mit dem Eigengewicht zurückgeschwenkt, indem das Wegeventil 22 beaufschlagt und das Wegeventil 18 in die gezeichnete Ausgangsstellung zurückbewegt wird. Die Versorgungsleitung 21 ist somit mit der Rückleitung 20 verbunden.

Um beide Zylinder 5 und 7 beaufschlagen zu können, kann das Zweiwegeventil 18 alternierend zwischen den beiden Stellungen umgeschaltet werden, so daß die Pumpe 14 abwechselnd mit den Versorgungsleitungen 19 und 21 der Zylinder 5 und 7 verbunden wird. Die dadurch bedingte Verlängerung des Gelenkparallelogrammes 1 wird rückgängig gemacht, wenn die beiden Zylinder 5 und 7 belüftet werden, so daß die im Lenker 6 des Gelenkparallelogrammes 1 angeordnete Rückzugfeder zur Wirkung kommt. Die Belüftung der Zylinder 5 und 7 erfolgt über ein Stellventil 23, das die Versorgungsleitungen 19 und 21 über eine gesonderte Rückleitung 24 mit dem Behälter 15 für das Hydraulikmittel verbindet. Zur Einhaltung einer Zwischenstellung braucht die Rückleitung 24 nur durch das Ventil 23 gesperrt zu werden.

Da an Hand der Fig. 4 die hydraulische Steuerung der Ladevorrichtung nur im wesentlichen dargestellt ist, wurde aus Übersichtlichkeitsgründen auf den im allgemeinen vorzusehenden Druckausgleich zwischen den beiden Zylindern 5 und 7 sowie auf eine Druckbegrenzung und eine Drosselung des Hydraulikrückflusses zum Abbremsen der Rückstellbewegungen bei der Darstellung verzichtet.

Wenn bisher davon gesprochen wurde, daß die Ladeplattform über ein verschwenkbares Gelenkparallelogramm am Fahrzeugrahmen angelenkt ist, so ist damit gemeint, daß die Konstruktion entsprechend einem Gelenkparallelogramm wirkt, wobei es nicht auf die Anzahl gleichwirkender, paralleler Lenker ankommt. Um Kippmomente besser abtragen zu können, werden im allgemeinen die Lenker des Gelenkparallelogrammes paarweise angeordnet werden, was selbstverständlich auch die paarweise Anordnung der
einen Teil des Gelenkparallelogrammes bildenden
Zylinder einschließt.

Patentansprüche:

1. Ladevorrichtung für Transportfahrzeuge mit einer einfaltbaren und unter die Ladepritsche klappbaren Ladeplattform (4), die über ein vertikal verschwenkbares Gelenkparallelogramm (1) mit einem Zylinder (7) als unteren Lenker am Fahrzeugrahmen (3) angelenkt ist, und mit einem vorzugsweise am oberen Lenker (6) des Gelenkparallelogrammes (1) angreifenden Hubzylinder (5), dadurch gekennzeichnet, daß der obere Lenker (6) des Gelenkparallelogrammes (1) längenverstellbar ausgebildet und mittels eines Stelltriebes in seiner Länge verstellbar ist.

2. Ladevorrichtung nach Anspruch 1, dadurch gekennzeichnet, daß der Stelltrieb für den oberen Lenker (6) des Gelenkparallelogrammes (1) aus dem Hubzylinder (5) und dem als unterer Lenker dienenden Zylinder (7) besteht, der abwechselnd oder gleichzeitig mit dem Hubzylinder (5) beaufschlagbar ist.

3. Ladevorrichtung nach Anspruch 1 oder 2, dadurch gekennzeichnet, daß der obere Lenker (6) des Gelenkparallelogrammes (1) durch eine Rückzugfeder belastet ist.

4. Ladevorrichtung nach Anspruch 3, dadurch gekennzeichnet, daß der obere Lenker (6) des Gelenkparallelogrammes als Teleskoprohr ausgebildet ist, das die Rückzugfeder aufnimmt.

0133860

FIG.1

FIG.2

FIG.3

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | EP-A-0 049 193 (MANUTIS) <br> * Seite 7, Zeile 6 - Seite 8, Zeile 13; Figuren 7-9 * <br><br> ----- | 1,2 | B 60 P 1/44 |
| | | | **RECHERCHIERTE SACHGEBIETE (Int. Cl. ³)** <br><br> B 60 P 1/00 |

Der vorliegende Recherchenbericht wurde für alle Patentansprüche erstellt.

| Recherchenort <br> BERLIN | Abschlußdatum der Recherche <br> 27-03-1984 | Prüfer <br> LUDWIG H J |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82